# EUROPEAN PATENT APPLICATION

(11) **EP 1 469 391 A1**
(43) Date of publication of application: **20.10.2004**
(21) Application number: 03101048.1
(22) Date of filing: 16.04.2003
(51) Int. Cl.: G06F 11/273

(54) **Remote controlled data processing system via a network**

(71) Applicant: Agilent Technologies, Inc., Palo Alto, CA 94306 (US)
(72) Inventor: Metzger, Michael, 71034, Böblingen (DE); Berl, Heinz, 71034, Böblingen (DE)
(74) Representative: Barth, Daniel

(57) **Abstract**

A data processing system comprises a master data processing unit (10) and a plurality of data processing units (70). The master data processing unit (10) comprises a display (20) and at least one peripheral device (30, 40, 50), and the display (20) is adapted for displaying graphics information received from the master data processing unit (10). Each peripheral device (30, 40, 50) is adapted for communicating peripheral information in at least one direction between the peripheral device (30, 40, 50) and the master data processing unit (10). Each one of the data processing units (70A) is coupled to a respective remote management unit (80A) adapted for providing a data communication between the coupled-to data processing unit (70A) and the master data processing unit (10). Each remote management unit (80) and the master data processing unit (10) are coupled by a network (60). The master data processing unit (10) is adapted to provide a data communication with each one of the data processing units (70A) by communicating over the network (60) at least one of graphics information and peripheral information between the master data processing unit (10) and the respective remote management unit (80A) of the respective data processing unit (70A).

## Description

### BACKGROUND OF THE INVENTION

The present invention relates to distributed data processing systems.

So-called KVM systems are known e.g. from US-A-2002-0143996. A plurality of servers are connected to a KVM switch allowing a user to control each of the servers from a stand alone computer with its own keyboard, video, and mouse (KVM).

### SUMMARY OF THE INVENTION

It is an object of the present invention to provide an improved operating of a plurality of data processing unit. The object is solved by the independent claims. Preferred embodiments are shown by the dependent claims.

According to the invention, the data communication between each data processing unit and the master data processing unit is provided through the respective remote management unit coupled to the respective data processing unit. Each remote management unit as well as the master data processing unit are coupled by the network, which can be any kind of standard data communication link such as a local area network (LAN), a Universal Serial Bus (USB) interconnection, etc. For operating a respective one of the data processing units, the master data processing unit respectively communicates with the remote management unit coupled to the respective data processing unit, and the remote management unit again communicates with the respective data processing unit coupled to. Such communication can be, for example, transmitting KVM data from the master data processing unit or receiving such KVM data from the respective data processing unit. This allows the master data processing unit to display graphics information provided from the data processing unit or to input peripheral information from respective peripheral devices coupled to the master data processing unit and communicating such peripheral information to the data processing unit. Thus, the master data processing unit can operate or control each one of the data processing units.

Whereas in conventional KVM systems the data communication is dependent on the operation of the KVM switch (as described in the aforementioned US-A-20020143996), each one of the data processing units remains individually operable for the master data processing unit, even if the data communication to another one of the data processing unit fails or is disabled for whatever reason. Thus, a critical bottleneck situation resulting from a failing central device, such as KVM switch, can be overcome.

Further, while the physical distribution of the data processing units in conventional KVM systems has often been limited by the requirements of coupling all of the data processing units to the KVM switch, the invention allows to freely distribute the data processing unit in their physical location as long as each data processing unit can be coupled through its remote management unit to the network. Thus, a virtually unlimited physical distribution of the data processing units including the master data processing unit can be achieved. Also, the number of data processing units is not limited.

In case of an application for so-called rack or blade management, no rack manager or management blade is needed.

The invention allows to provide a fully autonomous system e.g. with monitoring, email notification, SMS, alerting, diagnostics (BMC), etc.

In one embodiment, wherein a data medium device is coupled to the master data processing unit, the inventive system even allows to communicate medium data received from the data medium device or to be provided to the data medium device between the master data processing unit and a respective one of the data processing units. Such data medium device can be, for example a floppy disc, CD-ROM, DVD, hard disk (HDD), writable CD or DVD, or any other kind of mass storage medium. Thus, in case e.g. a CD-ROM is coupled to the master data processing unit, data stored on the CD-ROM can be read out to a respective one of the data processing units, or data from one data processing unit can be stored on the CD-ROM. Alternatively, the data processing unit can use such data medium of the master data processing unit to actually store data. For example in case of a system failure, a core dump can be saved (e.g. automatically) to writable CD or a hard disk.

In one preferred embodiment, at least one of the remote management units is embodied by a diagnostic unit as disclosed e.g. in EP-A-962862 by the same applicant, the teaching thereof shall be incorporated herein by reference. In this case, the remote management unit is coupled to an internal data bus of the respective data processing unit and comprises an own central processing unit (CPU) allowing to operate the remote management unit completely independent of the coupled to data processing unit. Configuration and data exchange can be performed through the internal data bus of the data processing unit, e.g. a standard PCI bus. For example, VGA console redirection can be performed by directly reading from the graphics chips linear frame buffer via PCI, as disclosed in the European Patent Application No. 01109116.2 by the same applicant, the teaching thereof shall be incorporated herein by reference.

In one embodiment, the remote management unit is coupled to at least one of a graphics interface and a peripheral interface of the respective data processing unit. Such graphic interface can be, for example, a standard VGA, which is often used to connect e.g. a CRT monitor. Another common interface can be DVI (Digital Video Interface), commonly used to connect TFT flat screen monitors to the data processing unit.

The peripheral interface can be, for example, a universal standard bus (USB). This interface is commonly used to dynamically extend the input/output capabilities of a data processing unit by supporting devices such as keyboard, mouse, CD, DVD, floppy disk, serial ports, hard drives (HDD), CD writers, memory etc. Other standard interfaces such as RS 232, Firewire, and parallel interfaces can be used alternatively.

The invention can be partly or entirely embodied or supported by one or more suitable software programs, which can be stored on or otherwise provided by any kind of data carrier, and which might be executed in or by any suitable data processing unit. Software programs or routines are preferably applied in the data processing units and are used e.g. to provide access or for management purposes. In the remote management units, Software programs or routines are preferably applied as Firmware on the remote management units, Java applet stored on the remote management units but executed on the data processing units, etc.

### BRIEF DESCRIPTION OF THE DRAWINGS

Other objects and many of the attendant advantages of the present invention will be readily appreciated and become better understood by reference to the following detailed description when considering in connection with the accompanied drawing(s). Features that are substantially or functionally equal or similar will be referred to with the same reference sign(s).
Figure 1 shows the principle architecture of an embodiment of the present invention.
Figures 2 and 3 show preferred embodiments illustrating the coupling between data processing unit and remote management unit.

### MORE DETAILED DESCRIPTION OF PREFERRED EMBODIMENTS ACCORDING TO THE INVENTION

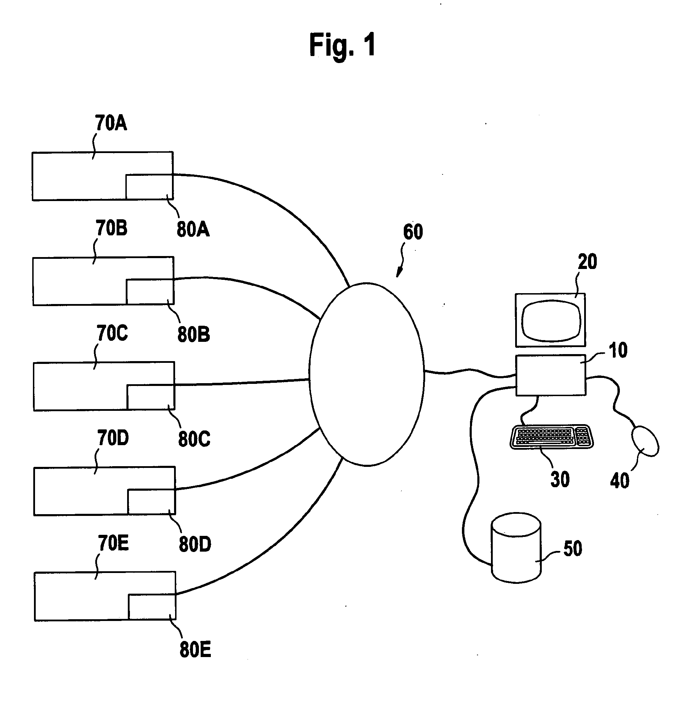

In Figure 1, a master data processing unit 10 is coupled to a display 20 for displaying information, a keyboard 30 for inputting information, a mouse 40 for moving a pointer displayed e.g. on the display 20, in a mass storage device 50 such as a CD-Rom, floppy disc, or hard disc. The master data processing 10 is further coupled to a network 60, which can be a local area network (LAN), a wide area network (WAN), a wireless LAN or any other embodiment that is suited to exchange data, e.g. USB. Further in Figure 1 is a plurality of data processing units 70A, 70B, ..., 70E. Each one of the data processing units 70 is coupled to a respective remote management unit 80, so that e.g. the data processing unit 70A is coupled to the remote management unit 80A, etc. Each remote management unit 80 is also coupled to the network 60.

In operation, when e.g. the master data processing unit 10 wants to operate the data processing unit 70A by inputting data through the keyboard 30 or displaying information from the data processing unit 70A on the display 20, the master data processing unit 10 receives the keyboard information from the keyboard 30 and transmits that keyboard information through the network 60 to the remote management unit 80A. The remote management unit 80A, in turn, transmits the keyboard information to the data processing unit 70A.

Correspondingly, graphics information from the data processing unit 70A is transmitted through the remote management unit 80A and the network 60 to master data processing unit 10, which, in turn, provides the received graphics information to the display 20. Thus, the master data processing unit 10 can fully operate each one of the data processing unit 70, e.g. by transmitting or receiving KVM data. Further, medium data from the mass storage 50 can be provided from the master data processing unit 10 over the network 60 and using the respective remote management unit 80 to thereto coupled data processing unit 70, or vice versa. Alternatively, the mass storage 50 can be connected through the network 60 to a remote data processing unit (different from the data processing units 10 and 70, not shown in Fig. 1), which can be accessed by the master data processing unit 10.

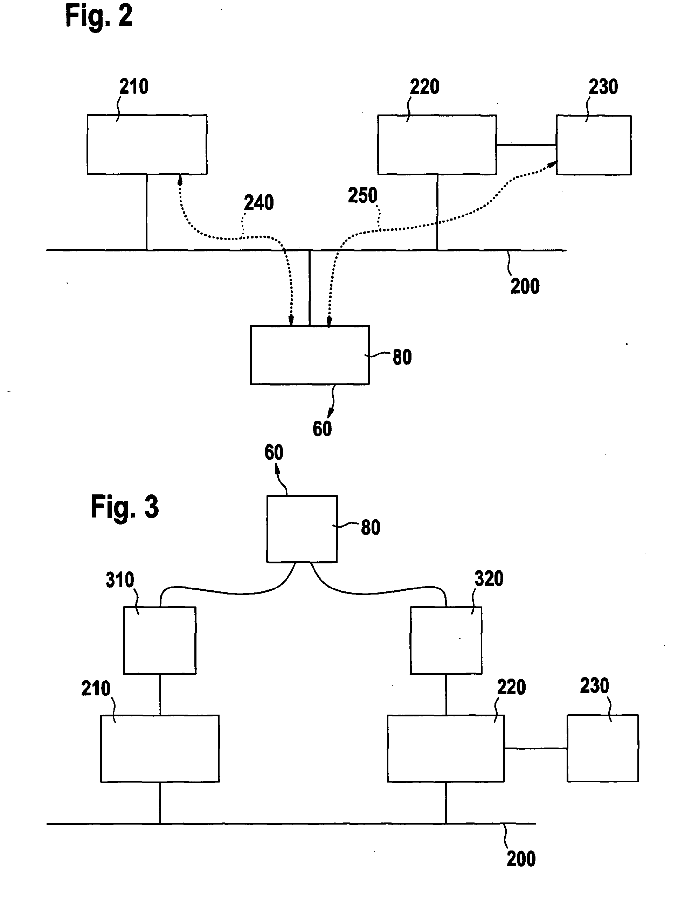

In Figure 2, a respective remote management unit 80 is coupled to an internal bus 200 of the respective data processing unit 70. The data processing unit 70 comprises a CPU 210, a graphics unit 220 with a graphics memory 230. Both, the CPU 210 and the graphics unit 220 are also coupled to the internal bus 200. By coupling to the internal bus 200, the remote management unit 80 can receive peripheral information from the CPU 210 or provide peripheral information to the CPU 210 as indicated by dotted arrow 240. Accordingly, graphics information can be received from the graphics unit 220 or the graphics memory 230 or provided thereto over the internal bus 200 as indicated by dotted arrow 250. The remote management unit 80 can read the respective graphics and peripheral device information by means to the bus 200 in an autonomous and asynchronous fashion, e.g. as laid out in detail in the aforementioned European Patent Application No. 01109116.2.

In Figure 3, in contrast to the embodiment of Figure 2, the remote management unit 80 is coupled to a peripheral interface 310 as well as to a graphic interface 320 of the data processing unit 70. The peripheral interface 310, which can be, for example, a USB connection, a serial or parallel connection, firewire, or any other standard external computer interface, is coupled to the CPU 210. The graphics interface 320, which is coupled to the graphics unit 220, can be for example a VGA or DVI connection, etc.

In operation, the remote management unit 80 can receive or transmit peripheral information through the peripheral interface 310. Accordingly, the remote management unit 80 can receive graphics information through the graphics interface 320. It is clear that the connection types of Figs. 2 and 3 can be combined as well, so that e.g. in Fig. 3 the remote management unit 80 is also coupled to the internal bus 200 (e.g. directly or by a baseboard management controller BMC connection), or that the remote management unit 80 of Fig. 2 is further coupled to interfaces (not shown in Fig. 2) corresponding to the peripheral interface 310 and the graphic interface 320 (of Fig. 3) of the data processing unit 70.

## Claims

1. A data processing system comprising a master data processing unit (10) and a plurality of data processing units (70), wherein:
• the master data processing unit (10) comprises a display (20) and at least one peripheral device (30, 40, 50),
• the display (20) is adapted for displaying graphics information received from the master data processing unit (10),
• each peripheral device (30, 40, 50) is adapted for communicating peripheral information in at least one direction between the peripheral device (30, 40, 50) and the master data processing unit (10),
• each one of the data processing units (70A) is coupled to a respective remote management unit (80A) adapted for providing a data communication between the coupled-to data processing unit (70A) and the master data processing unit (10),
• each remote management unit (80) and the master data processing unit (10) are coupled by a network (60),
• the master data processing unit (10) is adapted to provide a data communication with each one of the data processing units (70A) by communicating over the network (60) at least one of graphics information and peripheral information between the master data processing unit (10) and the respective remote management unit (80A) of the respective data processing unit (70A).

2. The system of claim 1 or any one of the above claims, wherein:
• peripheral information comprises at least one of: input data from a data input device (30), pointer information (40) for moving a pointer to be displayed on a display (20), medium data from a data medium device (50).

3. The system of claim 1 or any one of the above claims, wherein:
• at least one peripheral device (30, 40, 50) is one of: a data input device (30) adapted for inputting data, a pointing device (40) adapted for moving a pointer that can be displayed on the display (20), a data medium device (50) adapted for storing data.

4. The system of claim 1 or any one of the above claims, wherein:
• at least one remote management unit (80) is coupled to at least one of: a graphics interface (320) and a peripheral interface (310) of the respective data processing unit (70),
• each graphics interface (320) is adapted for providing at least one of: inputting graphics information from a device external to the data processing unit, outputting graphics information to a device external to the data processing unit,
• each peripheral interface (310) is adapted for providing at least one of: inputting peripheral information from a device external to the data processing unit, outputting peripheral information to a device external to the data processing unit.

5. The system of claim 5, wherein:
• at least one graphics interface (320) is one of: a VGA interface , Digital Video Interface, FPL, DVO, hmm;
• at least one peripheral interface (310) is one of: a USB interface, Firewire, RS232.

6. The system of claim 1 or any one of the above claims, wherein:
• at least one remote management unit (80) is coupled to an internal bus (200) of the respective data processing unit (70), preferably one of: PCI, PCIX, PCI-Express, Serial ATA, low Pin Count Bus.

7. The system of claim 1 or any one of the above claims, wherein:
at least one remote management unit (80) comprises an own central processing unit - CPU - independent of a CPU of the respective data processing unit (70), so that operation of the remote management unit (80) is independent of an operation of the respective data processing unit (70).

8. The system of claim 1 or any one of the above claims, wherein:
the network (60) is one of: a data communication link, a local area network (LAN), a Universal Serial Bus (USB) interconnection.

9. The system of claim 1 or any one of the above claims, wherein:
the plurality of data processing units (70) are physically located in close proximity to each other, preferably in a rack system, such as a server rack system, or a blade system.

10. A method for operating in a data processing system comprising a master data processing unit (10) and a plurality of data processing units (70), wherein:
• the master data processing unit (10) comprises a display (20) and at least one peripheral device (30, 40, 50),
• the display (20) is adapted for displaying graphics information received from the master data processing unit (10),
• each peripheral device (30, 40, 50) is adapted for communicating peripheral information in at least one direction between the peripheral device (30, 40, 50) and the master data processing unit (10),
• each one of the data processing units (70A) is coupled to a respective remote management unit (80A) adapted for providing a data communication between the coupled-to data processing unit (70A) and the master data processing unit (10),
• each remote management unit (80) and the master data processing unit (10) are coupled by a network (60),
the method comprising the steps of:
providing a data communication between the master data processing unit (10) and each one of the data processing units (70A) by communicating over the network (60) at least one of graphics information and peripheral information between the master data processing unit (10) and the respective remote management unit (80A) of the respective data processing unit (70A).

11. A software program or product, preferably stored on a data carrier, for executing the method of claim 10 when run on a data processing system such as a computer.
